# EUROPÄISCHE PATENTSCHRIFT

(11) **EP 3 510 218 B1**
(45) Veröffentlichungstag und Bekanntmachung des Hinweises auf die Patenterteilung: **10.11.2021**
(21) Anmeldenummer: 17768725.8
(22) Anmeldetag: 07.09.2017
(51) Int. Cl.: E05B 81/08, E05B 81/16, H02K 37/04, H02K 37/12, H02K 19/10, H02K 33/16, E05B 47/00, H02K 26/00

(54) **KRAFTFAHRZEUGSCHLOSS**
MOTOR VEHICLE LOCK
SERRURE DE VÉHICULE AUTOMOBILE

(30) Priorität: 09.09.2016 DE 202016105005 U
(43) Veröffentlichungstag der Anmeldung: 17.07.2019
(73) Patentinhaber: Brose Schliesssysteme GmbH & Co. KG, 42369 Wuppertal (DE)
(72) Erfinder: KOTHE, Markus, 42553 Velbert (DE); STEFANIC, Josip, 51519 Odenthal (DE)
(74) Vertreter: Gottschald Patentanwälte Partnerschaft mbB
(86) Internationale Anmeldenummer: PCT/EP2017/072437
(87) Internationale Veröffentlichungsnummer: WO 2018/046585

(56) Entgegenhaltungen:
- EP-A2- 2 886 759
- WO-A1-2013/127531
- DE-U1- 9 213 623
- US-A- 4 501 980

## Beschreibung

Die Erfindung betrifft ein Kraftfahrzeugschloss gemäß dem Oberbegriff von Anspruch 1.

Das in Rede stehende Kraftfahrzeugschloss dient der Herstellung eines haltenden Eingriffs zwischen einer Kraftfahrzeugtür o. dgl. mit der Kraftfahrzeugkarosserie. Hier kommt einer mechanisch robusten, einbruchsicheren und gleichzeitig kostengünstigen Auslegung besondere Bedeutung zu.

Das bekannte Kraftfahrzeugschloss (WO 2013/12753) A1), von dem die Erfindung ausgeht, zeigt ein Kraftfahrzeugschloss mit einem Gesperre aus Schlossfalle und Sperrklinke sowie mit einer Schlossmechanik, die in unterschiedliche Schlosszustände wie "entriegelt", "verriegelt" o. dgl. bringbar ist. Für die Verstellung der Schlossmechanik in die unterschiedlichen Schlosszustände ist eine elektrische Einstellanordnung vorgesehen, die nach Art eines Direktantriebs ausgestaltet ist. Die Einstellanordnung weist einen Rotor mit einer Permanentmagnetanordnung und einen Stator mit einer Spulenanordnung auf. Durch die Symmetrie der Einstellanordnung bezogen auf die Rotorachse ist eine universelle Einsetzbarkeit der Einstellanordnung gewährleistet. Im Hinblick auf die Herstellungskosten besteht jedoch noch Optimierungspotential. Weiterhin ist aus der US 4 501 980 A ein Motor für Robotersysteme mit ortsfester Rotor-Magnetanordnung bekannt.

Der Erfindung liegt das Problem zugrunde, das bekannte Kraftfahrzeugschloss unter Kostengesichtspunkten zu optimieren, ohne die Leistungsfähigkeit des Kraftfahrzeugschlosses im Übrigen zu beeinträchtigen.

Wesentlich ist die grundsätzliche Überlegung, dass der Rotor die ihm zugeordnete Rotor-Magnetanordnung nicht notwendigerweise bei jeder Antriebsbewegung mitbewegen muss. Vielmehr ist erkannt worden, dass bei geeigneter magnetischer Kopplung zwischen dem Rotor und der Rotor-Magnetanordnung eine schwenkende Antriebsbewegung des Rotors bei feststehender Rotor-Magnetanordnung möglich ist. Damit kommt dem Rotor, der als Abtrieb der Einstellanordnung dient, nur noch die zusätzliche Funktion der Führung des von der Rotor-Magnetanordnung erzeugten Magnetfelds zu.

Im Einzelnen wird vorgeschlagen, dass die Rotor-Magnetanordnung und die Stator-Magnetanordnung ortsfest an einem Tragabschnitt des Kraftfahrzeugschlosses festgelegt sind, bei dem es sich vorteilhafterweise um einen Schlossgehäuseabschnitt des Kraftfahrzeugschlosses handelt. Der Rotor ist gegenüber dem Tragabschnitt und gegenüber der Rotor-Magnetanordnung um eine Rotorachse schwenkbar. Durch die Kopplung des Rotors mit der Rotor-Magnetanordnung bildet der Rotor mindestens zwei magnetische, ungleichnamige Rotorpole der Rotor-Magnetanordnung aus, die entsprechend mit dem Rotor um die Rotorachse schwenkbar sind. Als "Pol" wird vorliegend stets ein flächiger, magnetleitender Abschnitt verstanden, aus dem das magnetische Feld, auf das das Antriebsmoment zurückgeht, austreten kann.

Mit der vorschlagsgemäßen Lösung ist eine gewichtsoptimierte Auslegung des Rotors möglich, so dass zunächst einmal der für die Antriebsbewegungen erforderliche Leistungseinsatz entsprechend reduziert ist. Dies führt wiederum zu einer kostengünstigen Auslegung der Spulenanordnung.

Ferner ergibt sich durch die gewichtsoptimierte Auslegung des Rotors ein gutes dynamisches mechanisches Verhalten des Rotors, da beispielsweise ein Überschwingen des Rotors beim Anfahren einer Antriebsstellung reduziert ist. Die gewichtsoptimierte Auslegung des Rotors ist auch im Hinblick auf das Crashverhalten des Kraftfahrzeugschlosses vorteilhaft, da nur geringe Trägheitskräfte auf den Rotor wirken.

Schließlich ergibt sich mit der vorschlagsgemäßen Lösung eine hohe Einbruchsicherheit, da der Rotor durch ein externes Magnetfeld mangels auf dem Rotor angeordneten Permanentmagneten in seiner Rotorstellung kaum manipulierbar ist.

Bei der besonders bevorzugten Ausgestaltung gemäß Anspruch 2 ist die bestrombare Spulenanordnung Bestandteil der Rotor-Magnetanordnung, während die Stator-Magnetanordnung eine Permanentmagnetanordnung aufweist. Die Spulenanordnung lässt sich optimal in den Rotor integrieren, wie noch gezeigt wird.

Das bevorzugte Prinzip der Erzeugung des Antriebsmoments besteht gemäß Anspruch 3 darin, dass sich ungleichnamige Pole des Rotors einerseits und des Stators andererseits beim Anfahren der jeweiligen Antriebsstellung einander annähern. Die resultierende Antriebsstellung ist vorzugsweise magnetisch stabil. Dies bedeutet, dass zumindest während der Bestromung die jeweilige Antriebsstellung dem Zustand minimaler magnetischer potentieller Energie entspricht, so dass eine von außen bewirkte Auslenkung des Rotors aus der jeweiligen Antriebsstellung heraus unabhängig von der Richtung der Auslenkung zu einem magnetischen Drehmoment auf den Rotor in die jeweilige Antriebsstellung führt. Die magnetisch stabilen Antriebsstellungen lassen sich also anfahren, ohne dass mechanische Endanschläge erforderlich sind.

Die Einstellanordnung als solche, also im nicht montierten Zustand, ist gemäß Anspruch 6 vorzugsweise so ausgelegt, dass sie mit dem Rotor in Abhängigkeit von der Bestromung mindestens zwei magnetisch stabile Antriebsstellungen anfahren kann.

Die weiter bevorzugten Ausgestaltungen gemäß den Ansprüchen 9 bis 11 erlauben eine Anpassung der Auslegung der Einstellanordnung auf den jeweiligen Anwendungsfall hin. Hier tritt die universelle Anwendbarkeit zu Gunsten einer kostengünstigen Auslegung in den Hintergrund.

Die weiter bevorzugten Ausgestaltungen gemäß den Ansprüchen 12 bis 14 betreffen eine besonders kompakte konstruktive Auslegung, bei der gemäß Anspruch 13 die Magnetspule der Rotor-Magnetanordnung durch einen Teil des Rotors durchdrungen wird. Bei der Auslegung des Rotors mit zwei Rotorblechen, die über ein auf die Rotorachse ausgerichtetes Koppelteil magnetisch miteinander gekoppelt sind, übernimmt der Rotor gewissermaßen die Funktion eines magnetischen Jochs, das die Magnetspule durchdringt und das gegenüber der Magnetspule um die Rotorachse schwenkbar ist.

Es ergibt sich aus den voranstehenden Überlegungen, dass die Einstellanordnung zur Einstellung unterschiedlicher Funktionselemente der Schlossmechanik einsetzbar ist. Dabei kann das jeweilige Funktionselement, ggf. über ein zwischengeschaltetes Getriebe, mit dem Rotor gekoppelt sein, mit dem Rotor verbunden oder von dem Rotor ausgebildet sein. Anspruch 16 zeigt dies anhand eines Kupplungselements einer Kupplungsanordnung der Schlossmechanik.

Ganz allgemein ist es so, dass der Rotor der Einstellanordnung ein integraler Bestandteil der Schlossmechanik, beispielsweise ein Hebel, insbesondere ein Kupplungselement, der Schlossmechanik, sein kann.

Im Folgenden wird die Erfindung anhand einer lediglich ein Ausführungsbeispiel darstellenden Zeichnung näher erläutert. In der Zeichnung zeigt
- Fig. 1: ein vorschlagsgemäßes Kraftfahrzeugschloss a) im Schlosszustand "verriegelt" und b) im Schlosszustand "entriegelt", jeweils in einer perspektivischen Ansicht,
- Fig. 2: das Kraftfahrzeugschloss gemäß Fig. 1 in einer Explosionsdarstellung,
- Fig. 3: die Rotoranordnung der Einstellanordnung des Kraftfahrzeugschlosses als solche gemäß Fig. 1 in einer perspektivischen Darstellung und in zwei Schnittdarstellungen und
- Fig. 4: die Einstellanordnung des Kraftfahrzeugschlosses gemäß Fig. 1 als solche a) im Schlosszustand "verriegelt" und b) im Schlosszustand "entriegelt", jeweils in einer perspektivischen Darstellung.

Das in der Zeichnung dargestellte Kraftfahrzeugschloss 1 dient der Herstellung einer haltenden Verbindung zwischen einer Kraftfahrzeugtür 1 o. dgl. und einer Kraftfahrzeugkarosserie. Dabei ist der Begriff "Kraftfahrzeugtür" weit auszulegen. Er umfasst Schwenktüren und Schiebetüren, insbesondere Seitentüren, Hecktüren, Heckdeckel, Heckklappen, Motorhauben o. dgl..

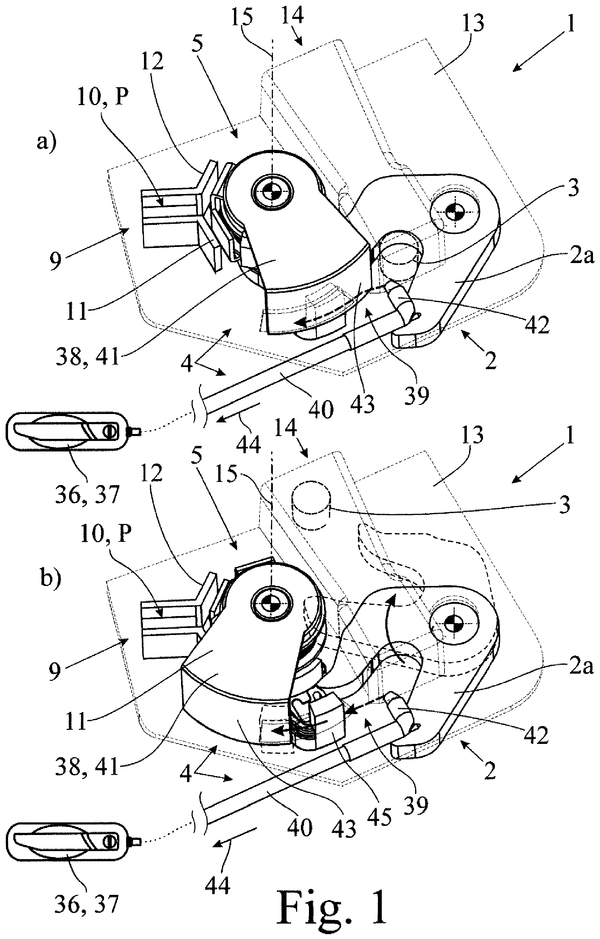

Das Kraftfahrzeugschloss 1 ist mit einem Gesperre 2 ausgestattet, das vorzugsweise die üblichen Schließelemente Schlossfalle 2a und Sperrklinke 2b aufweist. Die Schlossfalle 2a lässt sich in eine in Fig. 1 dargestellte Schließstellung bringen, in der sie von der Sperrklinke 2b fixiert wird und in der sie mit einem Schließteil 3, insbesondere mit einem Schließbügel, einem Schließbolzen o. dgl. in haltendem Eingriff steht. Dabei kann das Kraftfahrzeugschloss 1 an der Kraftfahrzeugtür und das Schließteil 3 an der Kraftfahrzeugkarosserie angeordnet sein. Dies ist auch umgekehrt denkbar.

Das Kraftfahrzeugschloss 1 ist ferner mit einer Schlossmechanik 4 ausgestattet, die in unterschiedliche Schlosszustände wie "verriegelt", "entriegelt" o. dgl. bringbar ist. In Abhängigkeit vom Schlosszustand lässt sich das Kraftfahrzeugschloss 1 im eingebauten Zustand von innen oder von außen öffnen, wie noch erläutert wird.

Vorliegend steht die Einstellung unterschiedlicher Schlosszustände der Schlossmechanik 4 mittels einer elektrischen Einstellanordnung 5 im Vordergrund. Dabei kommt dem strukturellen Aufbau der Einstellanordnung 5 besondere Bedeutung zu.

Die Einstellanordnung 5 weist eine Rotoranordnung 6 auf, der ein Rotor 7 und eine Rotor-Magnetanordnung 8 zur Erzeugung eines Rotor-Magnetfelds zugeordnet ist. Der Rotor 7 ist vorzugsweise aus einem weichmagnetischen Material ausgestaltet, so dass das Rotor-Magnetfeld über den Rotor 7 geführt wird.

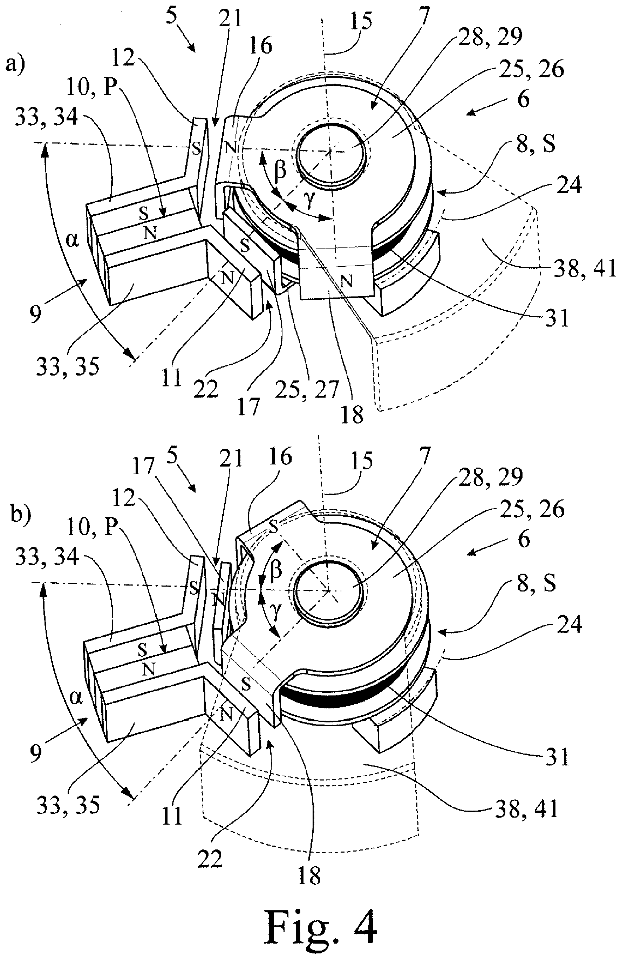

Die Einstellanordnung 5 weist ferner einen Stator 9 auf, dem eine Stator-Magnetanordnung 10 zur Erzeugung eines Stator-Magnetfelds zugeordnet ist. Der Aufbau des Stators 9 lässt sich am besten der Darstellung gemäß Fig. 4 entnehmen.

Der Stator 9 bildet mindestens zwei magnetische, ungleichnamige Statorpole 11, 12 der Stator-Magnetanordnung 10 aus. Der Begriff "ungleichnamig" ist darauf bezogen, dass ein magnetischer Pol stets ein Nordpol oder ein Südpol ist. Sofern zwei Pole jeweils ein Nordpol oder jeweils ein Südpol sind, so handelt es sich um gleichnamige Pole. Ist dagegen ein Pol ein Nordpol und der andere Pol ein Südpol, so handelt es sich um ungleichnamige Pole.

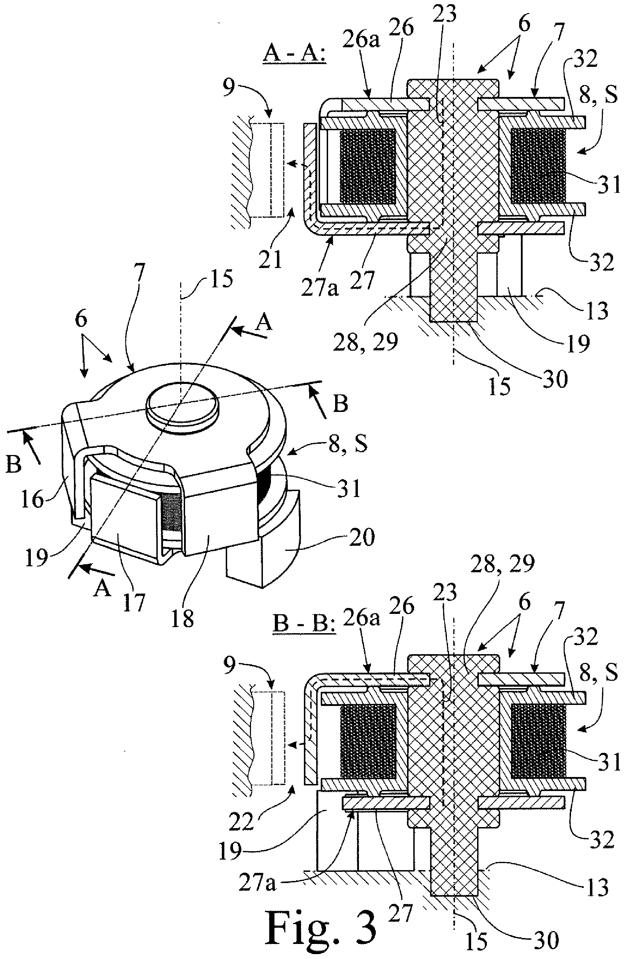

Zumindest einer der Magnetanordnungen, also der Rotor-Magnetanordnung 8 und der Stator-Magnetanordnung 10, ist eine bestrombare Spulenanordnung S zur Erzeugung des jeweiligen Magnetfelds zugeordnet. Es lässt sich der Darstellung gemäß Fig. 3 entnehmen, dass hier die Rotor-Magnetanordnung 8 die Spulenanordnung S aufweist. Durch eine Bestromung der Spulenanordnung S und eine noch zu erläuternde, resultierende magnetische Wechselwirkung zwischen Rotor 7 und Stator 9 ist ein Antriebsmoment auf den Rotor 7 und damit eine Verstellung des Rotors 7 in eine vorbestimmte Anzahl von Antriebsstellungen erzeugbar. Dies bedeutet, dass die Anzahl der anfahrbaren Antriebsstellungen begrenzt ist, so dass die Einstellanordnung 5 im weitesten Sinne nach Art eines Schrittmotors arbeitet.

Wie in der Zeichnung dargestellt, sind sowohl die Rotor-Magnetanordnung 8, als auch die Stator-Magnetanordnung 10 ortsfest an einem Tragabschnitt 13 des Kraftfahrzeugschlosses 1 festgelegt. Bei dem Tragabschnitt 13 handelt es sich hier und vorzugsweise um einen Schlossgehäuseabschnitt, der weiter vorzugsweise auch ein Einlaufmaul 14 für das Schließteil 3 bereitstellt.

Der Rotor 7 ist gegenüber dem Tragabschnitt 13 und gegenüber der Rotor-Magnetanordnung 8 um eine Rotorachse 15 schwenkbar, wie sich aus einer Zusammenschau von Fig. a) und Fig. b) ergibt. Dadurch, dass der Rotor 7 durch seine magnetische Kopplung mit der Rotor-Magnetanordnung 8 mindestens zwei ungleichnamige Rotorpole 16, 17, 18 ausbildet, sind diese entsprechend ebenfalls um die Rotorachse 15 schwenkbar. Mit einer Veränderung der Rotorstellung lässt sich also auch die Lage der Rotorpole 16, 17, 18 verändern.

Für die Festlegung der Rotor-Magnetanordnung 8 sind verschiedene konstruktive Möglichkeiten denkbar. Hier und vorzugsweise ist die Rotor-Magnetanordnung 8 über Lagerböcke 19, 20 am Tragabschnitt 13 festgelegt.

Der Zeichnung lässt sich weiter entnehmen, dass die Lage des Rotors 7 relativ zum Stator 9 nur durch die Festlegung von Rotor 7 und Stator 9 an dem Tragabschnitt 13 definiert ist. Insoweit sind Rotor 7 und Stator 9 separat voneinander am Tragabschnitt 13 und insbesondere gehäuselos am Tragabschnitt 13 festgelegt.

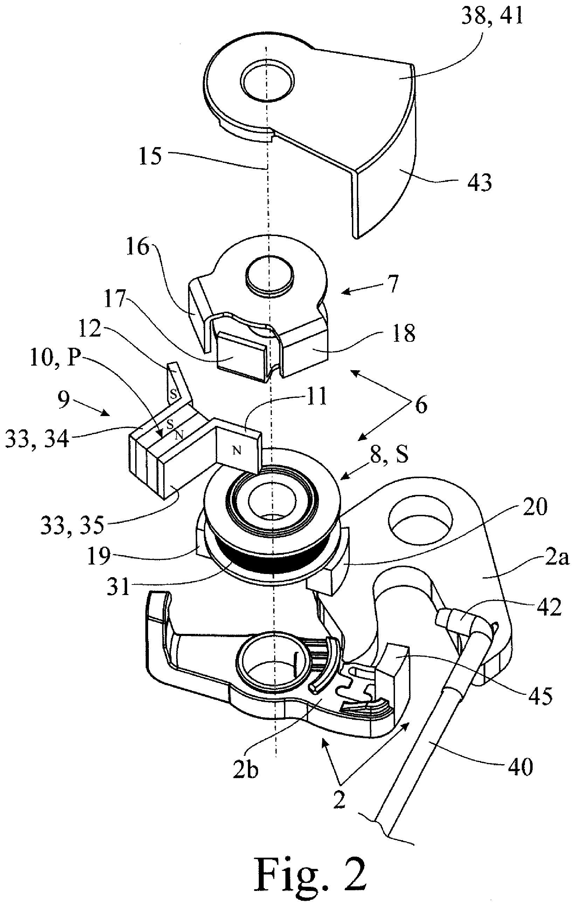

Für den strukturellen Aufbau der Einstellanordnung 5 sind verschiedene vorteilhafte Varianten denkbar. Hier und vorzugsweise weist die Rotor-Magnetanordnung 8 wie oben angesprochen die Spulenanordnung S zur Erzeugung des Rotor-Magnetfelds auf, während die Stator-Magnetanordnung 10 eine Permanentmagnetanordnung P zur Erzeugung des Stator-Magnetfelds aufweist. Die Spulenanordnung S einerseits und die Permanentmagnetanordnung P andererseits sind der Darstellung gemäß Fig. 2 zu entnehmen. Alternativ, hier jedoch nicht dargestellt, kann es vorteilhaft sein, dass die Stator-Magnetanordnung 10 eine Spulenanordnung S zur Erzeugung des Stator-Magnetfelds aufweist, während die Rotor-Magnetanordnung 8 eine Permanentmagnetanordnung P zur Erzeugung des Rotor-Magnetfelds aufweist.

Die Bestromung der Spulenanordnung S kann auf unterschiedliche Weise erfolgen. Vorzugsweise geht die Bestromung hier auf eine gepulste oder ungepulste Gleichspannung o. dgl. zurück. Sofern die Spulenanordnung mehrere separat bestrombare Magnetspulen umfasst, kann die Bestromung nicht nur in der Bestromungsrichtung, sondern auch in der Auswahl der bestromten Magnetspulen variiert werden.

Hier und vorzugsweise beschränken sich die möglichen Bestromungsvarianten mangels mehrerer separat bestrombarer Magnetspulen auf die Umkehr der Bestromungsrichtung. Zwei in diesem Sinne unterschiedliche Bestromungsvarianten für die Spulenanordnung S sind in Fig. 4 gezeigt. Die in Fig. 4 gezeigten Bestromungsvarianten sind gegenläufig vorgesehen. Dies bedeutet, dass die Bestromungsrichtungen hier entgegengesetzt sind.

Bei der Bestromungsvariante gemäß Fig. 4a handelt es sich bei den Rotorpolen 16, 18 um Nordpole und bei dem Rotorpol 17 um einen Südpol der Rotor-Magnetanordnung 8. Der Statorpol 11 ist hier ein Nordpol, während der Statorpol 12 ein Südpol ist. Bei einem Bestromen der Spulenanordnung S nähern sich die ungleichnamigen Pole 16, 12; 17, 11 des Rotors 7 einerseits und des Stators 9 andererseits bis auf einen jeweiligen Magnetspalt 21, 22 durch eine Verstellung des Rotors 7 einander an, wodurch sie einen der in Fig. 4a gezeigten Antriebsstellung zugeordneten Magnetkreis für das Überlagerungsfeld aus Rotorfeld und Statorfeld schließen. In Fig. 3 ist der magnetische Fluss 23 des Überlagerungsfelds für die Bestromungsvariante gemäß Fig. 4a gezeigt.

Vereinfacht lässt sich die obige Verstellung des Rotors 7 so begründen, dass sich die ungleichnamigen Pole 16, 12; 17, 11 anziehen, bis der jeweilige Magnetspalt 21, 22 minimal geworden ist. In der in Fig. 4a gezeigten Stellung ist der Zustand minimaler magnetischer potentieller Energie erreicht worden, so dass es sich um die dortige Antriebsstellung um eine im obigen Sinne magnetisch stabile Antriebsstellung handelt.

Wird nun die Bestromungsrichtung umgekehrt, so ergibt sich der in Fig. 4b gezeigte Zustand. Die Umkehr der Bestromungsrichtung führt dazu, dass die Rotorpole 16, 18 jeweils Südpole und der Rotorpol 17 ein Nordpol sind. Bei der obigen, vereinfachten Betrachtung führt dies dazu, dass sich die ungleichnamigen Pole 17, 12; 18, 11 anziehen, während sich die gleichnamigen Pole 16, 12 und 17, 11 abstoßen. Dadurch nähern sich die ungleichnamigen Pole 17, 12; 18, 11 von Rotor 7 und Stator 9 bis auf einen jeweiligen Magnetspalt 21, 22 durch eine Verstellung des Rotors 7 einander an, wodurch wiederum ein dieser zweiten Antriebsstellung zugeordneter Magnetkreis für das Überlagerungsfeld aus Rotorfeld und Statorfeld geschlossen wird. Auch mit der in Fig. 4b gezeigten Antriebsstellung wird der oben angesprochene Zustand minimaler magnetischer potentieller Energie erzeugt, so dass es sich auch bei dieser Antriebsstellung um eine magnetisch stabile Antriebsstellung handelt.

Nach der obigen Erläuterung ist es so, dass unterschiedlichen Antriebsstellungen, die durch eine Bestromung der Spulenanordnung S angefahren werden, unterschiedliche Magnetkreise für das Überlagerungsfeld aus Rotorfeld und Statorfeld zugeordnet sind. Dies ergibt sich dadurch, dass in Abhängigkeit von der Rotorstellung unterschiedliche Rotorpole 16, 17, 18 einen jeweiligen Magnetspalt 21, 22 mit den Statorpolen 11, 12 ausbilden.

Interessant bei dem dargestellten Ausführungsbeispiel ist weiter, dass in jeder Antriebsstellung bei abgeschalteter Bestromung das Magnetfeld der Permanentmagnetanordnung P, hier und vorzugsweise das Statorfeld, über den der jeweiligen Antriebsstellung zugeordneten Magnetkreis verläuft. Dies bedeutet, dass auch bei abgeschalteter Bestromung eine magnetisch stabile Antriebsstellung vorliegt, die allein auf das Stator-Magnetfeld, hier also auf das Magnetfeld der Permanentmagnetanordnung P, zurückgeht. Insoweit ergibt sich eine Art rastende Festlegung des Rotors 7 in den Antriebsstellungen, so dass auf Rastfedern o. dgl. für eine entsprechende Festlegung des Rotors 7 verzichtet werden kann.

Je nach Auslegung der vorschlagsgemäßen Einstellanordnung 5 lassen sich eine unterschiedliche Anzahl von Antriebsstellungen einstellen. Ganz allgemein kann es vorgesehen sein, dass die Einstellanordnung 5 als solche in Abhängigkeit von der Bestromung, also durch entsprechende Bestromung, der Spulenanordnung S durch das resultierende Antriebsmoment mindestens zwei, vorzugsweise mindestens drei, magnetisch stabile Antriebsstellungen anfahren kann. Bei dem dargestellten und insoweit bevorzugten Ausführungsbeispiel fährt die Einstellanordnung 5 als solche wie oben erläutert bei gegenläufiger Bestromung durch das resultierende Antriebsmoment genau zwei magnetisch stabile Antriebsstellungen an. Damit lassen sich beispielsweise die Schlosszustände "verriegelt" und "entriegelt" mit minimalem konstruktivem Aufwand umsetzen.

Insbesondere für die Umsetzung lediglich zweier Antriebsstellungen ist es vorzugsweise vorgesehen, dass der Rotor 7 drei Rotorpole 16, 17, 18 der Rotor-Magnetanordnung 8 ausbildet, von denen nur zwei Rotorpole 16, 18 gleichnamig sind, während der Stator 9 zwei ungleichnamige Statorpole 11, 12 der Stator-Magnetanordnung 10 ausbildet. Dabei entspricht der auf die Rotorachse 15 bezogene Winkelabstand α zwischen den Statorpolen 11, 12 dem Winkelabstand β, y zwischen zwei nebeneinander liegenden Rotorpolen 16, 17; 17, 18, wobei vorzugsweise davon ausgegangen wird, dass die Winkelabstände β, y vorzugsweise identisch zueinander sind. Durch diese Abstimmung der Winkelabstände α, β, γ aufeinander ergibt sich grundsätzlich die Möglichkeit, dass in einer ersten, in Fig. a) gezeigten Antriebsstellung die Pole 16, 12; 17, 11 jeweils einen Magnetspalt 21, 22 bilden und dass in einer zweiten Antriebsstellung die Pole 17, 12; 18, 11 jeweils einen Magnetspalt 21, 22 bilden.

Die Rotorpole 16, 17, 18 sind über zumindest einen Teil des Umfangs des Rotors 7 verteilt angeordnet, wie sich der Darstellung gemäß Fig. 4 entnehmen lässt. Sie sind bezogen auf die Rotorachse 16, 17, 18 insoweit radial ausgerichtet, als die aus den Rotorpolen 16, 17, 18 austretenden Magnetfeldlinien ebenfalls radial ausgerichtet sind. Alternativ ist es aber auch denkbar, dass die Rotorpole 16, 17, 18 bezogen auf die Rotorachse 15 axial ausgerichtet sind.

Die obige Funktionsweise der vorschlagsgemäßen Einstellanordnung 5 erlaubt, dass die Rotorpole 16, 17, 18 der Rotor-Magnetanordnung 8 bezogen auf die Rotorachse 15 über einen Winkelbereich von weniger als 180°, vorzugsweise von weniger als 120° verteilt angeordnet sind. Mit dieser reduzierten und auf die Lage der Antriebsstellungen ausgerichteten Auslegung des Rotors 7 lässt sich eine weitere Gewichtsreduzierung erreichen.

Eine ähnliche Situation ergibt sich bei den Statorpolen 11, 12 der Stator-Magnetanordnung 10. Zunächst darf darauf hingewiesen werden, dass bei dem dargestellten und insoweit bevorzugten Ausführungsbeispiel auch die Statorpole 11, 12 im obigen Sinne radial ausgerichtet sind. Alternativ kann es auch hier vorgesehen sein, dass eine axiale Ausrichtung der Statorpole 11, 12 realisiert wird, sofern die Rotorpole 16, 17, 18 entsprechend ebenfalls axial ausgerichtet sind.

Die Statorpole 11, 12 der Stator-Magnetanordnung 10 sind, wie in Fig. 4 dargestellt, entlang zumindest eines Teils einer Bewegungsbahn 24 des Rotors 7 verteilt angeordnet. Dabei ergibt eine reduzierte Auslegung, dass die Statorpole 11, 12 der Stator-Magnetanordnung 10 bezogen auf die Rotorachse 15 über einen Winkelbereich von weniger als 180° und vorzugsweise von weniger als 120° verteilt angeordnet sind. Auch mit dieser reduzierten Auslegung ergibt sich eine weitere Gewichtsreduzierung für das Kraftfahrzeugschloss 1 insgesamt.

Die vorschlagsgemäße Einstellanordnung 5 lässt sich in weiten Teilen asymmetrisch ausgestalten, was letztlich eine Folge der Anpassung der Einstellanordnung 5 auf den jeweiligen Anwendungsfall ist. Entsprechend kann die Stator-Magnetanordnung 10 bezogen auf die Rotorachse 15 asymmetrisch ausgestaltet und/oder angeordnet sein. Alternativ oder zusätzlich kann die Rotor-Magnetanordnung 8 bezogen auf die Rotorachse 15 asymmetrisch ausgestaltet/angeordnet sein. Mit dieser Asymmetrie wird die universelle Einsetzbarkeit der Einstellanordnung 5 zu Gunsten einer gewichtsreduzierten und kostengünstigen Anordnung eingeschränkt. Allerdings lässt sich der Zeichnung entnehmen, dass die vorschlagsgemäße Einstellanordnung 5 auf ganz unterschiedliche Antriebsstellungen eingestellt werden kann, indem der Rotor 7 einerseits und der Stator 9 andererseits umgestaltet werden. Diese Umgestaltung lässt sich besonders einfach umsetzen, wenn der Rotor 7 eine in der Zeichnung gezeigte Rotorblechanordnung 25 aufweist, die magnetisch mit der Rotor-Magnetanordnung 8 gekoppelt ist und die die Rotorpole 16, 17, 18 ausbildet.

Fig. 3 zeigt, dass die Rotorblechanordnung 25 für die Ausbildung der ungleichnamigen Rotorpole 16, 18 zwei Rotorbleche 26, 27 aufweist, die über ein auf die Rotorachse 15 ausgerichtetes Koppelteil 28, hier und vorzugsweise einen Koppelzapfen 29, magnetisch miteinander gekoppelt sind. Hierfür sind die beiden Rotorbleche 26, 27 mit dem Koppelteil 28 vernietet, verschweißt o. dgl..

Der grundsätzliche Aufbau der Rotorbleche 26, 27 besteht darin, dass die Rotorbleche 26, 27 jeweils einen Grundkörper 26a, 27a aufweisen, der sich im Wesentlichen quer zu der Rotorachse 15 erstreckt und von dem die Rotorpole 16, 17, 18 klauenartig abgebogen sind. Eine solche klauenartige Ausgestaltung der Rotorpole 16, 17, 18 ist aus dem Bereich der Klauenpol-Motoren bekannt.

Das Koppelteil 28, das hier und vorzugsweise als Koppelzapfen 29 ausgestaltet ist, bildet einen Bestandteil eines Schwenklagers 30 für den Rotor 7. Diese Doppelnutzung des Koppelteils 28 führt zu einer insgesamt besonders kompakten Ausgestaltung.

Wie in Fig. 3 gezeigt, weist die Spulenanordnung S mindestens eine, hier und vorzugsweise genau eine, ortsfest an dem Tragabschnitt 13 festgelegte Magnetspule 31 der Rotor-Magnetanordnung 8 auf, die koaxial zu der Rotorachse 15 ausgerichtet ist. Damit ergibt sich eine magnetische Durchflutung des Koppelteils 28, aus der sich wiederum das Rotorfeld ergibt.

Konstruktiv ist es vorgesehen, dass das Koppelteil 28 die Magnetspule 31 der Rotor-Magnetanordnung durchdringt. Dabei ist es bei dem dargestellten und insoweit bevorzugten Ausführungsbeispiel weiter so, dass die Magnetspule 31 bis auf ein gewisses Spiel mit dem Koppelteil 28 in Eingriff steht. Weiter vorzugsweise sind die beiden Rotorbleche 26, 27 des Rotors 7 an gegenüberliegenden Stirnseiten 32 der Magnetspule 31 angeordnet. Dadurch ergibt sich die oben angesprochene Funktion des Rotors 7 nach Art eines Jochs.

Eine ähnliche Art der Führung des Magnetfelds ist vorzugsweise für den Stator 9 vorgesehen. Entsprechend weist der Stator 9 vorzugsweise eine Statorblechanordnung 33 auf, die magnetisch mit der Stator-Magnetanordnung 10 gekoppelt ist und die die Statorpole 11, 12 ausbildet.

Sowohl die Rotorblechanordnung 25 als auch die Statorblechanordnung 31 sind bei dem dargestellten und insoweit bevorzugten Ausführungsbeispiel auf besonders einfache Weise fertigbar. Dies gilt speziell für die Realisierung der Rotorpole 16, 17, 18 und der Statorpole 11, 12, da diese vollständig plan ausgestaltet sind. Dadurch lassen sich die Rotorpole 16, 17, 18 und die Statorpole 11, 12 ohne Weiteres durch Abbiegen des betreffenden Blechs erzeugen. Für die Vermeidung von Streuflüssen kann es allerdings vorgesehen sein, dass die Magnetspalte 21, 22 jeweils eine über den gesamten Magnetspalt 21, 22 identische Spaltbreite aufweisen. Hierfür wird vorgeschlagen, dass die Rotorpole 16, 17, 18 und die Statorpole 11, 12 im Querschnitt quer zu der Rotorachse 15 gesehen kreisförmig ausgestaltet sind.

Die Statorblechanordnung 33 weist bei dem dargestellten Ausführungsbeispiel zwei Statorbleche 34, 35 auf, die die Statorpole 11, 12 ausbilden. Hierfür sind die Statorbleche 34, 35 entsprechend mit der Permanentmagnetanordnung P magnetisch gekoppelt. Dabei ergibt sich der Vorteil, dass die Permanentmagnetanordnung P als solche nicht auf den Rotor 7 ausgerichtet werden muss, sondern dass diese Ausrichtung über die Statorbleche 34, 35 bewerkstelligt werden kann. Insoweit kann die Permanentmagnetanordnung P unabhängig von der konkreten Auslegung der Einstellanordnung 5 mit planen Polflächen für das Ausleiten des Magnetfelds ausgestattet sein. Die Ausrichtung und Anordnung der Statorpole 11, 12 lässt sich dann, wie oben angesprochen, über die Statorblechanordnung 33 realisieren. Durch die Vereinfachung der Integration der Permanentmagnetanordnung P ergibt sich eine weitere Kostenreduzierung.

Für die Ausgestaltung der Schlossmechanik 4 sind zahlreiche vorteilhafte Varianten denkbar. Ganz allgemein ist es so, dass im montierten Zustand das Kraftfahrzeugschloss 1 mit einem Betätigungsgriff 36, insbesondere mit einem Türaußengriff 37 oder einem Türinnengriff, gekoppelt ist, wobei das Gesperre 2 in Abhängigkeit vom Schlosszustand der Schlossmechanik 4 durch eine Betätigung des Betätigungsgriffs 36 öffenbar ist oder nicht öffenbar ist. Das Öffnen des Gesperres 2 erfolgt hier und vorzugsweise durch ein Ausheben der Sperrklinke 2b aus der in Fig. 1b gezeigten Situation heraus.

Ganz allgemein weist die Schlossmechanik 4 ein Funktionselement 38 auf, das zur Einstellung unterschiedlicher Schlosszustände in unterschiedliche Funktionsstellungen bringbar ist. Dabei ist das Funktionselement 38 vorzugsweise mit dem Rotor 7 gekoppelt, hier und vorzugsweise mit dem Rotor 7 verbunden oder sogar von dem Rotor 7 ausgebildet. Beispielsweise kann es sich bei dem Funktionselement 38 um einen Hebel aus weichmagnetischem Material handeln, an dem die Rotorpole 16, 17, 18 ausgeformt sind.

Die in Fig. 1 dargestellte Schlossmechanik 4 ist in besonders vorteilhafter Weise mit der vorschlagsgemäßen Einstellanordnung 5 anwendbar. Die Schlossmechanik 4 weist hier eine Kupplungsanordnung 39 zur schaltbaren Kupplung eines Betätigungselements 40 mit dem Gesperre 2, hier und vorzugsweise mit der Sperrklinke 2b des Gesperres 2, auf. Dabei weist die Kupplungsanordnung 39 als oben angesprochenes Funktionselement ein verstellbares Kupplungselement 41 auf, das je nach einzustellendem Schlosszustand zu verstellen ist. Das Betätigungselement 40 ist weiter vorzugsweise mit einem Betätigungsgriff 36, insbesondere mit dem Türaußengriff 37, gekoppelt, sofern das Kraftfahrzeugschloss 1 montiert ist. Bei dem Betätigungselement 40 handelt es sich vorzugsweise um eine Betätigungsstange, die mit einer Eingriffsausformung 42 ausgestattet ist. Das Betätigungselement 40 ist je nach Schlosszustand in kuppelnden Eingriff mit dem Gesperre 2 bringbar, um die Schlossfalle 2b auszuheben.

Der Begriff "kuppelnder Eingriff" ist hier weit auszulegen und umfasst auch eine solche Wechselwirkung zwischen dem Betätigungselement 40 und dem Gesperre 2, bei der ein Zwischenelement oder mehrere Zwischenelemente zwischengeschaltet ist bzw. sind. Insoweit kann es sich bei dem kuppelnden Eingriff um einen mittelbaren Eingriff oder um einen unmittelbaren Eingriff zwischen dem Betätigungselement 40 und dem Gesperre 2 handeln. Vorliegend handelt es sich um einen unmittelbaren Eingriff, bei der die Eingriffsausformung 42 des Betätigungselements 40 gemäß Fig. 1b in Eingriff mit einer Gegenausformung 45 an der Sperrklinke 2b des Gesperres 2 kommt. Damit kommt es zu einem Ausheben der Sperrklinke 2b und im Ergebnis zum Öffnen des Gesperres 2 insgesamt.

Bei der dargestellten und insoweit bevorzugten Ausgestaltung der Kupplungsanordnung 39 weist das Kupplungselement 41 eine Führungsfläche 43 auf, die zumindest in einer Stellung des Kupplungselements 41 die Betätigungsbewegung des Betätigungselements 40 außer kuppelnden Eingriff von dem Gesperre 2 oder in kuppelnden Eingriff mit dem Gesperre 2 ablenkt. Vorzugsweise umfasst dieses Ablenken eine Änderung der Bewegungsrichtung des Betätigungselements 40.

Im Ergebnis lässt sich das Gesperre 2 im Schlosszustand "entriegelt", der in Fig. 1b gezeigt ist, durch eine Betätigung des Betätigungselements 40 öffnen, da ein Ablenken der Betätigungsbewegung des Betätigungselements 40 nicht stattfindet. Befindet sich die Schlossmechanik 4 dagegen im Schlosszustand "verriegelt", so ergibt sich die in Fig. 1a dargestellte Situation, in der die Führungsfläche 43 die Betätigungsbewegung des Betätigungselements 40 außer kuppelnden Eingriff von dem Gesperre 2 ablenkt.

Interessant bei der in Fig. 1 dargestellten Schlossmechanik 4 ist weiter, dass das Betätigungselement 40 vor seiner Betätigung, also in dem in Fig. 1 jeweils unbetätigten Zustand, stets frei von der Führungsfläche 43 des Kupplungselements 41 ist. Eine Verstellung des Kupplungselements 41 ist also unbehindert von dem Betätigungselement 40 und im Ergebnis mit geringem Leistungseinsatz möglich. Dadurch kann die Einstellanordnung 5, die der Verstellung des Kupplungselements 41 dient, auf den geringen Leistungseinsatz hin ausgelegt werden, was wiederum zu einer Gewichtsreduzierung und gleichzeitig zu einer Kostenreduzierung führt.

Abschließend darf darauf hingewiesen werden, dass sich eine ganze Reihe konstruktiver Varianten für die Einstellanordnung 5 ergeben, die je nach Anwendungsfall vorteilhaft sein können, in der Zeichnung jedoch nicht dargestellt sind. Beispielsweise ist eine weitgehend beliebige Auslegung und Anordnung, insbesondere magnetische Ausrichtung, der Permanentmagnetanordnung P der Stator-Magnetanordnung 10 denkbar, sofern die Stator-Blechanordnung 33 im Ergebnis eine entsprechende Ausrichtung der Statorpole 11, 12 gewährleistet.

Ferner ist bei dem dargestellten Ausführungsbeispiel in den Magnetspalten 21, 22 jeweils ein Magnetfeld vorgesehen, das bezogen auf die Rotorachse 15 im Wesentlichen radial ausgerichtet ist. Alternativ kann es aber wie schon angedeutet vorgesehen sein, dass die Rotorpole 16, 17, 18 und die Statorpole 11, 12 so ausgerichtet sind, dass sich in den Magnetspalten 21, 22 jeweils ein bezogen auf die Rotorachse 15 axiales Magnetfeld ergibt. Andere vorteilhafte Bauformen sind im Rahmen der vorschlagsgemäßen Lehre denkbar.

## Patentansprüche

1. Kraftfahrzeugschloss mit einem Gesperre (2), mit einer Schlossmechanik (4) und mit einer elektrischen Einstellanordnung (5) zur Einstellung unterschiedlicher Schlosszustände der Schlossmechanik (4),
wobei die Einstellanordnung (5) eine Rotoranordnung (6), der ein Rotor (7) und eine Rotor-Magnetanordnung (8) zur Erzeugung eines Rotor-Magnetfelds zugeordnet ist, und ein Stator (9), dem eine Stator-Magnetanordnung (10) zur Erzeugung eines Stator-Magnetfelds zugeordnet ist, aufweist, wobei der Stator (9) mindestens zwei magnetische, ungleichnamige Statorpole (11, 12) der Stator-Magnetanordnung (10) ausbildet, wobei zumindest einer der Magnetanordnungen (8, 10) eine bestrombare Spulenanordnung (S) zur Erzeugung des jeweiligen Magnetfelds zugeordnet ist, wobei durch eine Bestromung der Spulenanordnung (S) und eine resultierende magnetische Wechselwirkung zwischen Rotor (7) und Stator (9) ein Antriebsmoment auf den Rotor (7) und damit eine Verstellung des Rotors (7) in eine vorbestimmte Anzahl von Antriebsstellungen erzeugbar ist,
**dadurch gekennzeichnet,**
**dass** die Rotor-Magnetanordnung (8) und die Stator-Magnetanordnung (10) ortsfest an einem Tragabschnitt (13), insbesondere an einem Schlossgehäuseabschnitt, des Kraftfahrzeugschlosses (1) festgelegt sind, dass der Rotor (7) gegenüber dem Tragabschnitt (13) und gegenüber der Rotor-Magnetanordnung (8) um eine Rotorachse (15) schwenkbar ist und mindestens zwei magnetische, ungleichnamige Rotorpole (16, 17, 18) der Rotor-Magnetanordnung (8) ausbildet, die entsprechend um die Rotorachse (15) schwenkbar sind.

2. Kraftfahrzeugschloss nach Anspruch 1, **dadurch gekennzeichnet, dass** die Rotor-Magnetanordnung (8) die Spulenanordnung (S) zur Erzeugung des Rotor-Magnetfelds aufweist und dass die Stator-Magnetanordnung (10) eine Permanentmagnetanordnung (P) zur Erzeugung des Stator-Magnetfelds aufweist, oder, dass die Stator-Magnetanordnung (10) die Spulenanordnung zur Erzeugung des Stator-Magnetfelds aufweist und dass die Rotor-Magnetanordnung (8) eine Permanentmagnetanordnung zur Erzeugung des Rotor-Magnetfelds aufweist.

3. Kraftfahrzeugschloss nach einem der vorhergehenden Ansprüche, **dadurch gekennzeichnet, dass** sich bei einem Bestromen der Spulenanordnung (S) ungleichnamige Pole des Rotors (7) einerseits und des Stators (9) andererseits bis auf einen jeweiligen Magnetspalt (21, 22) durch eine Verstellung des Rotors (7) einander annähern und dadurch einen der jeweiligen Antriebsstellung zugeordneten Magnetkreis für das Überlagerungsfeld aus Rotorfeld und Statorfeld schließen.

4. Kraftfahrzeugschloss nach einem der vorhergehenden Ansprüche, **dadurch gekennzeichnet, dass** unterschiedlichen Antriebsstellungen unterschiedliche Magnetkreise für das Überlagerungsfeld aus Rotorfeld und Statorfeld zugeordnet sind.

5. Kraftfahrzeugschloss nach einem der vorhergehenden Ansprüche, **dadurch gekennzeichnet, dass** in jeder Antriebsstellung bei abgeschalteter Bestromung das Magnetfeld der Permanentmagnetanordnung (P), insbesondere das Statorfeld, über den der jeweiligen Antriebsstellung zugeordneten Magnetkreis verläuft, so dass die jeweilige Antriebsstellung auch bei abgeschalteter Bestromung eine magnetisch stabile Antriebsstellung ist.

6. Kraftfahrzeugschloss nach einem der vorhergehenden Ansprüche, **dadurch gekennzeichnet, dass** die Einstellanordnung (5) als solche in Abhängigkeit von der Bestromung der Spulenanordnung (S) durch das resultierende Antriebsmoment mindestens zwei, vorzugsweise mindestens drei, magnetisch stabile Antriebsstellungen anfahren kann.

7. Kraftfahrzeugschloss nach einem der vorhergehenden Ansprüche, **dadurch gekennzeichnet, dass** die Einstellanordnung (5) als solche bei gegenläufiger Bestromung durch das resultierende Antriebsmoment genau zwei magnetisch stabile Antriebsstellungen anfährt.

8. Kraftfahrzeugschloss nach einem der vorhergehenden Ansprüche, **dadurch gekennzeichnet, dass** der Rotor (7) drei Rotorpole (16, 17, 18) der Rotor-Magnet-anordnung (8) ausbildet, von denen nur zwei Rotorpole (16, 18) gleichnamig sind und dass der Stator (9) zwei ungleichnamige Statorpole (11, 12) der Stator-Magnetanordnung (10) ausbildet, vorzugsweise, dass der auf die Rotorachse (15) bezogene Winkelabstand (a) zwischen den Statorpolen (11, 12) dem Winkelabstand (β, γ) zwischen zwei nebeneinanderliegenden Rotorpolen (16, 17; 17, 18) entspricht.

9. Kraftfahrzeugschloss nach einem der vorhergehenden Ansprüche, **dadurch gekennzeichnet, dass** die Rotorpole (16, 17, 18) über zumindest einen Teil des Umfangs des Rotors (7) verteilt angeordnet sind, und/oder, dass die Rotorpole (16, 17, 18) der Rotor-Magnetanordnung (8) bezogen auf die Rotorachse (15) über einen Winkelbereich von weniger als 180°, vorzugsweise von weniger als 120°, verteilt angeordnet sind.

10. Kraftfahrzeugschloss nach einem der vorhergehenden Ansprüche, **dadurch gekennzeichnet, dass** die Statorpole (11, 12) der Stator-Magnetanordnung (10) entlang zumindest eines Teils einer Bewegungsbahn (24) des Rotors (7) verteilt angeordnet sind, vorzugsweise, dass die Statorpole (11, 12) der Stator-Magnetanordnung (10) entlang nur eines Teils einer Bewegungsbahn (24) des Rotors (7) verteilt angeordnet sind, vorzugsweise, dass die Statorpole (11, 12) der Stator-Magnetanordnung (10) bezogen auf die Rotorachse (15) über einen Winkelbereich von weniger als 180°, vorzugsweise von weniger als 120°, verteilt angeordnet sind.

11. Kraftfahrzeugschloss nach einem der vorhergehenden Ansprüche, **dadurch gekennzeichnet, dass** die Stator-Magnetanordnung (10) bezogen auf die Rotorachse (15) asymmetrisch ausgestaltet und/oder angeordnet ist, und/oder, dass die Rotor-Magnetanordnung (8) bezogen auf die Rotorachse (15) asymmetrisch ausgestaltet und/oder angeordnet ist.

12. Kraftfahrzeugschloss nach einem der vorhergehenden Ansprüche, **dadurch gekennzeichnet, dass** der Rotor (7) eine Rotorblechanordnung (25) aufweist, die magnetisch mit der Rotor-Magnetanordnung (8) gekoppelt ist und die die Rotorpole (16, 17, 18) ausbildet, vorzugsweise, dass die Rotorblechanordnung (25) für die Ausbildung der ungleichnamigen Rotorpole zwei Rotorbleche (26, 27) aufweist, die über ein auf die Rotorachse (15) ausgerichtetes Koppelteil (28), insbesondere einen Koppelzapfen (29), magnetisch miteinander gekoppelt sind, vorzugsweise, dass die Rotorbleche (26, 27) jeweils einen Grundkörper (26a, 27a) aufweisen, der sich im Wesentlichen quer zu der Rotorachse (15) erstreckt und von dem die Rotorpole (16, 17, 18) klauenartig abgebogen sind.

13. Kraftfahrzeugschloss nach einem der vorhergehenden Ansprüche, **dadurch gekennzeichnet, dass** die Spulenanordnung (S) mindestens eine ortsfest an dem Tragabschnitt (13) festgelegte Magnetspule (31) der Rotor-Magnetanordnung (8) aufweist, die koaxial zu der Rotorachse (15) ausgerichtet ist, vorzugsweise, dass das Koppelteil (28) die Magnetspule (31) der Rotor-Magnetanordnung (8) durchdringt, weiter vorzugsweise, dass die beiden Rotorbleche (26, 27) des Rotors (7) an gegenüberliegenden Stirnseiten (32) der Magnetspule (31) angeordnet sind.

14. Kraftfahrzeugschloss nach einem der vorhergehenden Ansprüche, **dadurch gekennzeichnet, dass** der Stator (9) eine Statorblechanordnung (33) aufweist, die magnetisch mit der Stator-Magnetanordnung (10) gekoppelt ist und die die Statorpole (11, 12) ausbildet, vorzugsweise, dass die Permanentmagnetanordnung (P) der Stator-Magnetanordnung (10) einen Permanentmagneten aufweist, der magnetisch mit der Statorblechanordnung (33) gekoppelt ist, weiter vorzugsweise, dass die Statorblechanordnung (33) zwei Statorbleche (34, 35) aufweist, die jeweils mit einem Pol des Permanentmagneten verbunden sind.

15. Kraftfahrzeugschloss nach einem der vorhergehenden Ansprüche, **dadurch gekennzeichnet, dass** im montierten Zustand das Kraftfahrzeugschloss (1) mit einem Betätigungsgriff (36), insbesondere mit einem Türaußengriff (37) oder einem Türinnengriff, gekoppelt ist und das Gesperre (2) in Abhängigkeit vom Schlosszustand der Schlossmechanik (4) durch eine Betätigung des Betätigungsgriffs (36) öffenbar ist, dass die Schlossmechanik (4) ein Funktionselement (38) aufweist, das zur Einstellung unterschiedlicher Schlosszustände in unterschiedliche Funktionsstellungen bringbar ist und dass das Funktionselement (38) mit dem Rotor (7) gekoppelt ist, vorzugsweise, dass das Funktionselement (38) mit dem Rotor (7) verbunden oder von dem Rotor ausgebildet ist.

16. Kraftfahrzeugschloss nach einem der vorhergehenden Ansprüche, **dadurch gekennzeichnet, dass** die Schlossmechanik (4) eine Kupplungsanordnung (39) zur schaltbaren Kupplung eines Betätigungselements (40) mit dem Gesperre (2), insbesondere mit einer Sperrklinke (2b) des Gesperres (2), aufweist und dass die Kupplungsanordnung (39) als Funktionselement (38) ein verstellbares Kupplungselement (41) aufweist, vorzugsweise, dass das Kupplungselement (41) eine Führungsfläche (43) aufweist, die zumindest in einer Stellung des Kupplungselements (41) die Betätigungsbewegung des Betätigungselements (40) außer kuppelnden Eingriff von dem Gesperre (2) oder in kuppelnden Eingriff mit dem Gesperre (2) ablenkt, weiter vorzugsweise, dass das Betätigungselement (40) vor seiner Betätigung stets frei von dem Kupplungselement (41) ist.

## Claims

1. Motor vehicle lock having a locking mechanism (2), having a lock mechanism (4) and having an electrical setting arrangement (5) for setting different lock states of the lock mechanism (4),
wherein the setting arrangement (5) has a rotor arrangement (6), with which a rotor (7) and a rotor magnet arrangement (8) for generating a rotor magnetic field is associated, and a stator (9), with which a stator magnet arrangement (10) for generating a stator magnetic field is associated, wherein the stator (9) forms at least two magnetic, unlike stator poles (11, 12) of the stator magnet arrangement (10), wherein at least one of the magnet arrangements (8, 10) is associated with a coil arrangement (S) that can be supplied current to generate the respective magnetic field, wherein by supplying current to the coil arrangement (S) and a resulting magnetic interaction between the rotor (7) and stator (9), a drive torque to the rotor (7) and thus an adjustment of the rotor (7) can be generated in a predetermined number of actuator positions,
**characterized in that,**
the rotor magnet arrangement (8) and the stator magnet arrangement (10) are stationarily fixed to a support section (13), in particular to a lock housing section, of the motor vehicle lock (1), and **in that** the rotor (7) is pivotable about a rotor axis (15) relative to the support section (13) and relative to the rotor magnet arrangement (8) and forms at least two magnetic, unlike rotor poles (16, 17, 18) of the rotor magnet arrangement (8), which are respectively pivotable about the rotor axis (15).

2. Motor vehicle lock according to Claim 1, **characterized in that** the rotor magnet arrangement (8) has the coil arrangement (S) for generating the rotor magnetic field and **in that** the stator magnet arrangement (10) has a permanent magnet arrangement (P) for generating the stator magnetic field, or **in that** the stator magnet arrangement (10) has the coil arrangement for generating the stator magnetic field and **in that** the rotor magnet arrangement (8) has a permanent magnet arrangement for generating the rotor magnetic field.

3. Motor vehicle lock according to one of the preceding claims, **characterized in that** when current is supplied to the coil arrangement (S), unlike poles of the rotor (7) on the one hand and of the stator (9) on the other hand approach each other up to a respective magnetic gap (21, 22) by an adjustment of the rotor (7) and thereby close a magnetic circuit associated with the respective actuator position for the superposition field of rotor field and stator field.

4. Motor vehicle lock according to one of the preceding claims, **characterized in that** different actuator positions are associated with different magnetic circuits for the superposition field of rotor field and stator field.

5. Motor vehicle lock according to one of the preceding claims, **characterized in that** in each actuator position when the current supply is switched off, the magnetic field of the permanent magnet arrangement (P), in particular the stator field, passes through the magnetic circuit associated with the respective actuator position, so that the respective actuator position is a magnetically stable actuator position even when the current supply is switched off.

6. Motor vehicle lock according to one of the preceding claims, **characterized in that** the setting arrangement (5) as such, depending on the current supply to the coil arrangement (S), can rack in at least two, preferably at least three, magnetically stable actuator positions by the resulting drive torque.

7. Motor vehicle lock according to one of the preceding claims, **characterized in that** the setting arrangement (5) as such, when opposite current is supplied, racks in exactly two magnetically stable actuator positions by the resulting drive torque.

8. Motor vehicle lock according to one of the preceding claims, **characterized in that** the rotor (7) forms three rotor poles (16, 17, 18) of the rotor magnet arrangement (8), of which only two rotor poles (16, 18) are like and **in that** the stator (9) forms two unlike stator poles (11, 12) of the stator magnet arrangement (10), preferably **in that** the angular distance (a) between the stator poles (11, 12) with respect to the rotor axis (15) corresponds to the angular distance (β, γ) between two juxtaposed rotor poles (16, 17; 17, 18).

9. Motor vehicle lock according to one of the preceding claims, **characterized in that** the rotor poles (16, 17, 18) are arranged distributed over at least part of the circumference of the rotor (7), and/or **in that** the rotor poles (16, 17, 18) of the rotor magnet arrangement (8) are arranged distributed over an angular range of less than 180°, preferably less than 120°, with respect to the rotor axis (15).

10. Motor vehicle lock according to one of the preceding claims, **characterized in that** the stator poles (11, 12) of the stator magnet arrangement (10) are arranged distributed along at least part of a movement path (24) of the rotor (7), preferably **in that** the stator poles (11, 12) of the stator magnet arrangement (10) are arranged distributed along only a part of a movement path (24) of the rotor (7), preferably **in that** the stator poles (11, 12) of the stator magnet arrangement (10) are arranged distributed over an angular range of less than 180°, preferably less than 120°, with respect to the rotor axis (15).

11. Motor vehicle lock according to one of the preceding claims, **characterized in that** the stator magnet arrangement (10) is designed and/or arranged asymmetrically with respect to the rotor axis (15), and/or **in that** the rotor magnet arrangement (8) is designed and/or arranged asymmetrically with respect to the rotor axis (15).

12. Motor vehicle lock according to one of the preceding claims, **characterized in that** the rotor (7) has a rotor lamination arrangement (25) which is magnetically coupled to the rotor magnet arrangement (8) and which forms the rotor poles (16, 17, 18), preferably **in that** the rotor lamination arrangement (25) has two rotor laminations (26, 27) for the formation of the unlike rotor poles, which rotor laminations are magnetically coupled to each another via a coupling part (28), in particular a coupling pin (29), aligned on the rotor axis (15), preferably **in that** the rotor laminations (26, 27) each have a base body (26a, 27a) which extends essentially transversely to the rotor axis (15) and from which the rotor poles (16, 17, 18) are bent like a claw.

13. Motor vehicle lock according to one of the preceding claims, **characterized in that** the coil arrangement (S) has at least one magnetic coil (31) of the rotor magnet arrangement (8) stationarily fixed to the support section (13), which magnetic coil is aligned coaxially with the rotor axis (15), preferably **in that** the coupling part (28) penetrates the magnetic coil (31) of the rotor magnet arrangement (8), more preferably **in that** the two rotor laminations (26, 27) of the rotor (7) are arranged on opposite end faces (32) of the magnetic coil (31).

14. Motor vehicle lock according to one of the preceding claims, **characterized in that** the stator (9) has a stator lamination arrangement (33) which is magnetically coupled to the stator magnet arrangement (10) and which forms the stator poles (11, 12), preferably **in that** the permanent magnet arrangement (P) of the stator magnet arrangement (10) has a permanent magnet which is magnetically coupled to the stator lamination arrangement (33), more preferably **in that** the stator lamination arrangement (33) has two stator laminations (34, 35) which are each connected to a pole of the permanent magnet.

15. Motor vehicle lock according to one of the preceding claims, **characterized in that** in the assembled state, the motor vehicle lock (1) is coupled to an actuation handle (36), in particular to a door outer handle (37) or a door inner handle and the locking mechanism (2), depending on the lock state of the lock mechanism (4), can be opened by an actuation of the actuation handle (36), **in that** the lock mechanism (4) has a functional element (38) which can be brought into different functional positions to set different lock states and **in that** the functional element (38) is coupled to the rotor (7), preferably **in that** the functional element (38) is connected to the rotor (7) or is formed by the rotor.

16. Motor vehicle lock according to one of the preceding claims, **characterized in that** the lock mechanism (4) has a coupling arrangement (39) for the switchable coupling of an actuating element (40) to the locking mechanism (2), in particular with a locking pawl (2b) of the locking mechanism (2) and **in that** the coupling arrangement (39) has an adjustable coupling element (41) as a functional element (38), preferably **in that** the coupling element (41) has a guide surface (43) which, at least in one position of the coupling element (41), deflects the actuating movement of the actuating element (40) out of coupling engagement with the locking mechanism (2) or into coupling engagement with the locking mechanism (2), more preferably **in that** the actuating element (40) is always free of the coupling element (41) prior to its actuation.

## Revendications

1. Serrure de véhicule automobile comportant un dispositif de blocage (2), comportant un mécanisme de serrure (4) et comportant un ensemble de réglage électrique (5) servant au réglage de différents états de serrure du mécanisme de serrure (4),
l'ensemble de réglage (5) comprenant un ensemble rotor (6), auquel sont associés un rotor (7) et un ensemble d'aimant de rotor (8) servant à la génération d'un champ magnétique de rotor, et un stator (9), auquel est associé un ensemble d'aimant de stator (10) servant à la génération d'un champ magnétique de stator, le stator (9) formant au moins deux pôles de stator (11, 12) magnétiques de noms contraires de l'ensemble d'aimant de stator (10), un ensemble de bobines (S) pouvant être alimenté en courant pour la génération du champ magnétique respectif étant associé à au moins l'un des ensembles d'aimants (8, 10), un couple d'entraînement sur le rotor (7) et donc un réglage du rotor (7) dans un nombre prédéfini de positions d'entraînement pouvant être générés par une alimentation en courant de l'ensemble de bobines (S) et une interaction magnétique résultante entre le rotor (7) et le stator (9),
**caractérisée en ce que**
l'ensemble d'aimant de rotor (8) et l'ensemble d'aimant de stator (10) sont fixés à demeure sur une partie de support (13), en particulier sur une partie de boîtier de serrure, de la serrure de véhicule automobile (1), **en ce que** le rotor (7) est pivotant autour d'un axe de rotor (15) par rapport à la partie de support (13) et par rapport à l'ensemble d'aimant de rotor (8) et forme au moins deux pôles de rotor (16, 17, 18) magnétiques de noms contraires de l'ensemble d'aimant de rotor (8), lesquels pôles sont pivotants autour de l'axe de rotor (15) de manière correspondante.

2. Serrure de véhicule automobile selon la revendication 1, **caractérisée en ce que** l'ensemble d'aimant de rotor (8) comprend l'ensemble de bobines (S) servant à la génération du champ magnétique de rotor et **en ce que** l'ensemble d'aimant de stator (10) comprend un ensemble d'aimant permanent (P) servant à la génération du champ magnétique de stator, ou **en ce que** l'ensemble d'aimant de stator (10) comprend l'ensemble de bobines servant à la génération du champ magnétique de stator et **en ce que** l'ensemble d'aimant de rotor (8) comprend un ensemble d'aimant permanent servant la génération du champ magnétique de rotor.

3. Serrure de véhicule automobile selon l'une des revendications précédentes, **caractérisée en ce qu'**en cas d'alimentation en courant de l'ensemble de bobines (S), des pôles de noms contraires du rotor (7) d'une part et du stator (9) d'autre part se rapprochent les uns des autres jusqu'à un entrefer magnétique (21, 22) respectif par un réglage du rotor (7) et ferment donc un circuit magnétique associé à la position d'entraînement respective pour le champ de superposition constitué du champ de rotor et du champ de stator.

4. Serrure de véhicule automobile selon l'une des revendications précédentes, **caractérisée en ce que** différents circuits magnétiques pour le champ de superposition constitué du champ de rotor et du champ de stator sont associés à différentes positions d'entraînement.

5. Serrure de véhicule automobile selon l'une des revendications précédentes, **caractérisée en ce que** dans chaque position d'entraînement, en cas d'alimentation en courant coupée, le champ magnétique de l'ensemble d'aimant permanent (P), en particulier le champ de stator, passe par le circuit magnétique associé à la position d'entraînement respective, de sorte que la position d'entraînement respective soit une position d'entraînement magnétiquement stable même en cas d'alimentation en courant coupée.

6. Serrure de véhicule automobile selon l'une des revendications précédentes, **caractérisée en ce que** l'ensemble de réglage (5) en tant que tel, en fonction de l'alimentation en courant de l'ensemble de bobines (S), peut passer par au moins deux, de préférence au moins trois, positions d'entraînement magnétiquement stables par le biais du couple d'entraînement résultant.

7. Serrure de véhicule automobile selon l'une des revendications précédentes, **caractérisée en ce que** l'ensemble de réglage (5) en tant que tel, en cas d'alimentation en courant opposée, passe par exactement deux positions d'entraînement magnétiquement stables par le biais du couple d'entraînement résultant.

8. Serrure de véhicule automobile selon l'une des revendications précédentes, **caractérisée en ce que** le rotor (7) forme trois pôles de rotor (16, 17, 18) de l'ensemble d'aimant de rotor (8), parmi lesquels seulement deux pôles de rotor (16, 18) sont de même nom, et **en ce que** le stator (9) forme deux pôles de stator (11, 12) de noms contraires de l'ensemble d'aimant de stator (10), de préférence **en ce que** la distance angulaire (a), par rapport à l'axe de rotor (15), entre les pôles de stator (11, 12) correspond à la distance angulaire (β, γ) entre deux pôles de rotor (16, 17 ; 17, 18) juxtaposés.

9. Serrure de véhicule automobile selon l'une des revendications précédentes, **caractérisée en ce que** les pôles de rotor (16, 17, 18) sont disposés de manière répartie sur au moins une partie de la périphérie du rotor (7), et/ou **en ce que** les pôles de rotor (16, 17, 18) de l'ensemble d'aimant de rotor (8) sont disposés de manière répartie sur une plage angulaire de moins de 180°, de préférence de moins de 120°, par rapport à l'axe de rotor (15).

10. Serrure de véhicule automobile selon l'une des revendications précédentes, **caractérisée en ce que** les pôles de stator (11, 12) de l'ensemble d'aimant de stator (10) sont disposés de manière répartie le long d'au moins une partie d'un trajet de déplacement (24) du rotor (7), de préférence **en ce que** les pôles de stator (11, 12) de l'ensemble d'aimant de stator (10) ne sont disposés de manière répartie que le long d'une partie d'un trajet de déplacement (24) du rotor (7), de préférence **en ce que** les pôles de stator (11, 12) de l'ensemble d'aimant de stator (10) sont disposés de manière répartie sur une plage angulaire de moins de 180°, de préférence de moins de 120°, par rapport à l'axe de rotor (15).

11. Serrure de véhicule automobile selon l'une des revendications précédentes, **caractérisée en ce que** l'ensemble d'aimant de stator (10) est configuré et/ou disposé de manière asymétrique par rapport à l'axe de rotor (15), et/ou **en ce que** l'ensemble d'aimant de rotor (8) est configuré et/ou disposé de manière asymétrique par rapport à l'axe de rotor (15).

12. Serrure de véhicule automobile selon l'une des revendications précédentes, **caractérisée en ce que** le rotor (7) comprend un ensemble de tôles de rotor (25) qui est couplé magnétiquement à l'ensemble d'aimant de rotor (8) et qui forme les pôles de rotor (16, 17, 18), de préférence **en ce que** l'ensemble de tôles de rotor (25) comprend deux tôles de rotor (26, 27) pour la formation des pôles de rotor de noms contraires, lesquelles tôles sont couplées magnétiquement l'une à l'autre par le biais d'une partie de couplage (28), en particulier d'un axe de couplage (29), orienté(e) vers l'axe de rotor (15), de préférence **en ce que** les tôles de rotor (26, 27) comprennent respectivement un corps de base (26a, 27a) qui s'étend sensiblement transversalement à l'axe de rotor (15) et à partir duquel les pôles de rotor (16, 17, 18) sont courbés en forme de griffes.

13. Serrure de véhicule automobile selon l'une des revendications précédentes, **caractérisée en ce que** l'ensemble de bobines (S) comprend au moins une bobine magnétique (31), fixée à demeure sur la partie de support (13), de l'ensemble d'aimant de rotor (8), laquelle bobine magnétique est orientée coaxialement à l'axe de rotor (15), de préférence **en ce que** la partie de couplage (28) traverse la bobine magnétique (31) de l'ensemble d'aimant de rotor (8), mieux encore **en ce que** les deux tôles de rotor (26, 27) du rotor (7) sont disposées sur des côtés frontaux opposés (32) de la bobine magnétique (31) .

14. Serrure de véhicule automobile selon l'une des revendications précédentes, **caractérisée en ce que** le stator (9) comprend un ensemble de tôles de stator (33) qui est couplé magnétiquement à l'ensemble d'aimant de stator (10) et qui forme les pôles de stator (11, 12), de préférence **en ce que** l'ensemble d'aimant permanent (P) de l'ensemble d'aimant de stator (10) comprend un aimant permanent qui est couplé magnétiquement à l'ensemble de tôles de stator (33), mieux encore **en ce que** l'ensemble de tôles de stator (33) comprend deux tôles de stator (34, 35) qui sont reliées respectivement à un pôle de l'aimant permanent.

15. Serrure de véhicule automobile selon l'une des revendications précédentes, **caractérisée en ce qu'**à l'état monté la serrure de véhicule automobile (1) est couplée à une poignée d'actionnement (36), en particulier à une poignée extérieure de porte (37) ou une poignée intérieure de porte, et le dispositif de blocage (2) peut être ouvert par un actionnement de la poignée d'actionnement (36) en fonction de l'état de serrure du mécanisme de serrure (4), **en ce que** le mécanisme de serrure (4) comprend un élément fonctionnel (38) qui peut être amené à différentes positions fonctionnelles pour le réglage de différents états de serrure, et **en ce que** l'élément fonctionnel (38) est couplé au rotor (7), de préférence **en ce que** l'élément fonctionnel (38) est relié au rotor (7) ou est formé par le rotor.

16. Serrure de véhicule automobile selon l'une des revendications précédentes, **caractérisée en ce que** le mécanisme de serrure (4) comprend un ensemble d'accouplement (39) servant à l'accouplement commutable d'un élément d'actionnement (40) au dispositif de blocage (2), en particulier à un cliquet de blocage (2b) du dispositif de blocage (2), et **en ce que** l'ensemble d'accouplement (39) comprend en tant qu'élément fonctionnel (38) un élément d'accouplement (41) réglable, de préférence **en ce que** l'élément d'accouplement (41) comprend une surface de guidage (43) qui, au moins dans une position de l'élément d'accouplement (41), dévie le déplacement d'actionnement de l'élément d'actionnement (40) hors de prise d'accouplement avec le dispositif de blocage (2) ou en prise d'accouplement avec le dispositif de blocage (2), mieux encore **en ce que** l'élément d'actionnement (40) est, avant son actionnement, constamment dépourvu de l'élément d'accouplement (41).
